# FASCICULE DE BREVET EUROPEEN

(11) **EP 3 557 433 B1**
(45) Date de publication et mention de la délivrance du brevet: **12.01.2022**
(21) Numéro de dépôt: 19166456.4
(22) Date de dépôt: 01.04.2019
(51) Int. Cl.: G06F 15/173

(54) **PROCÉDÉ DE GESTION DU ROUTAGE DE TRANSACTIONS ENTRE AU MOINS UN ÉQUIPEMENT SOURCE ET AU MOINS UN ÉQUIPEMENT CIBLE, PAR EXEMPLE UNE MÉMOIRE MULTIPORTS, ET SYSTÈME SUR PUCE CORRESPONDANT**
STEUERUNGSVERFAHREN DES ROUTINGS VON TRANSAKTIONEN ZWISCHEN MINDESTENS EINEM QUELLGERÄT UND MINDESTENS EINEM ZIELGERÄT, BEISPIELSWEISE ZWISCHEN EINEM MULTIPORT-SPEICHER UND EINEM ENTSPRECHENDEN CHIPSYSTEM
METHOD FOR MANAGING THE ROUTING OF TRANSACTIONS BETWEEN AT LEAST ONE SOURCE DEVICE AND AT LEAST ONE TARGET DEVICE, FOR EXAMPLE A MULTIPORT MEMORY, AND CORRESPONDING SYSTEM ON A CHIP

(30) Priorité: 16.04.2018 FR 1853304
(43) Date de publication de la demande: 23.10.2019
(73) Titulaire: STMicroelectronics (Rousset) SAS, 13790 Rousset (FR)
(72) Inventeur: EL KHOURASSANI, Yassine, 06600 Antibes (FR); VALDENAIRE, Patrick, 06330 Roquefort les Pins (FR); ARDICHVILI, Emmanuel, 06560 Valbonne (FR)
(74) Mandataire: Casalonga

(56) Documents cités:
- FR-A1- 2 742 894
- US-A1- 2016 203 096
- M Venkateswararao ET AL: "A Frame work on AMBA Bus based Communication Architecture to Improve the Real Time Computing Performance in MPSoC", International Journal of Computer Applications, 18 avril 2014 (2014-04-18), pages 1-5, XP055551750, DOI: 10.5120/15874-4818 Extrait de l'Internet: URL:https://pdfs.semanticscholar.org/b947/ 6f02f95480435a10b55f69d4604171afb946.pdf [extrait le 2019-02-05]

## Description

Des modes de mise en œuvre et de réalisation de l'invention concernent le routage de transactions entre au moins un équipement source et au moins un équipement cible, par exemple mais non limitativement une mémoire multiports, au sein d'un système sur puce (SoC : System on Chip), et plus particulièrement la gestion du routage de telles transactions visant à adresser un espace mémoire sectorisé de l'équipement cible.

On connaît le document FR 2 742 894 qui décrit un ensemble de circuits comprenant des processeurs, des mémoires et des réseaux d'interconnexion, le réseau d'interconnexion comportant au moins une interface d'entrée et plusieurs interfaces de sortie.

Il existe un besoin de pouvoir gérer un tel routage, en fonction par exemple d'un critère de priorité d'adressage et/ou de qualité de service (« QoS : Quality of Service »), et ce de façon flexible en fonction de l'application envisagée. En effet, des applications différentes peuvent faire intervenir des équipements différents et/ou peuvent nécessiter d'affecter des critères de priorités d'adressage différents en fonction de la nature desdits équipements sources.

Selon un aspect il est proposé un système sur puce, comprenant
un circuit d'interconnexion (connu par l'homme du métier sous la dénomination anglo-saxonne « interconnect ») comportant au moins une interface d'entrée et plusieurs interfaces de sortie,
au moins un équipement source couplé à ladite interface d'entrée,
au moins un équipement cible, par exemple une mémoire multiports, possédant un espace adressable sectorisé et plusieurs ports d'accès respectivement couplés auxdites interfaces de sortie, ledit au moins un équipement source étant configuré pour délivrer des transactions (par exemple des transactions d'écriture ou de lecture) contenant des mots d'adresses audit au moins un équipement cible.

Lorsque plusieurs équipements sources sont prévus, des transactions émises par des équipements sources différents peuvent être émises séquentiellement ou simultanément.

Lorsque plusieurs équipements cibles sont prévus, tous peuvent recevoir des transactions émanant de tous les équipements sources ou bien certains de ces équipements cibles peuvent recevoir des transactions de certains seulement des équipements sources.

Le système sur puce contient également au moins un module de commande programmable couplé audit au moins un équipement source.

Ce module de commande comporte une table (« look-up table ») configurée pour, une fois le module de commande programmé, indiquer pour chaque secteur dudit espace adressable l'un des ports d'accès.

Ce module de commande comporte aussi un circuit de commande, apte en présence de chaque transaction émanant dudit au moins un équipement source, à délivrer au circuit d'interconnexion un mot de commande désignant le port d'accès indiqué dans la table compte tenu du mot d'adresse contenu dans ladite transaction.

Le circuit d'interconnexion est alors configuré pour router ladite transaction depuis ladite au moins une interface d'entrée vers l'interface de sortie couplée à ce port d'accès conjointement avec le mot de commande et délivrer ladite transaction audit port d'accès, l'interface de sortie étant configurée pour ne pas délivrer le mot de commande au port d'accès, le contenu de chaque transaction délivrée à un port d'accès étant identique au contenu de la transaction correspondante délivrée par l'équipement source quel que soit le port d'accès sélectionné.

Ainsi, le circuit d'interconnexion est configuré pour recevoir avec chaque transaction un mot de commande et pour router ladite transaction vers l'un des ports d'accès en fonction de la valeur de ce mot de commande.

Et, en fonction de l'application envisagée, c'est-à-dire par exemple en fonction de la nature du ou des équipements sources et d'une nécessité d'affecter une priorité à certaines transactions d'adressage émanant d'un ou de plusieurs équipements sources, l'utilisateur pourra programmer pour chaque équipement source, le contenu de la table associée de façon à affecter un port d'accès du ou des équipements cibles à chaque secteur de l'espace d'adressage de l'équipement cible correspondant.

Ainsi, pour chaque transaction émanant d'un équipement source, le circuit de commande contenu dans le module de commande va pouvoir vérifier quel secteur est visé par le mot d'adresse contenu dans ladite transaction et ajuster la valeur du mot de commande correspondant de façon à désigner le port d'accès associé à ce secteur et mentionné dans la table correspondante.

Le circuit d'interconnexion est alors configuré pour, en présence d'une telle valeur du mot de commande, router ladite transaction depuis ladite au moins une interface d'entrée vers l'interface de sortie couplée à ce port d'accès choisi.

Par ailleurs, quel que soit le port d'accès choisi pour une transaction émanant d'un équipement source, le contenu de cette transaction délivré au port d'accès est identique au contenu de la transaction délivré par l'équipement source. En d'autres termes, si par exemple l'équipement cible est une mémoire double port, et si la transaction comporte une adresse d'écriture dans la mémoire, la transaction ne doit pas être perturbée par le mot de commande de façon à ce que son contenu soit identique quel que soit le port d'accès de la mémoire pour que ladite transaction permette de pointer à la même adresse dans l'espace-mémoire de la mémoire, que la transaction soit reçue sur l'un ou l'autre des ports d'accès.

Ainsi, le même système sur puce peut être utilisé pour différentes applications nécessitant par exemple des affectations de priorités différentes et donc des allocations de port d'accès différentes.

Selon le mode de mise en œuvre, une façon particulièrement simple pour obtenir que le contenu de chaque transaction délivré à un port d'accès soit identique au contenu de la transaction correspondante délivré par l'équipement source quel que soit le port d'accès sélectionné, est de prévoir que chaque transaction soit routée conjointement avec le mot de commande vers l'interface de sortie correspondante et que l'interface de sortie soit configurée pour ne pas délivrer le mot de commande au port d'accès correspondant.

Selon un mode de réalisation, chaque transaction est incorporée au sein d'un mot principal de n bits tandis que le mot de commande comporte m bits additionnels.

La valeur de m est au moins égale à 1 et dépend du nombre de ports d'accès à sélectionner.

Ainsi, si le nombre de ports d'accès est égal à 2, m pourra être égal à 1. Si le nombre de ports d'accès est égal à 3 ou 4, m sera égal à 2.

Chaque circuit de commande est configuré pour ajuster la valeur des m bits de façon à désigner ledit port d'accès compte tenu du mot d'adresse contenu dans ladite transaction et de ladite table correspondante.

Chaque interface d'entrée est alors configurée pour recevoir un mot global de n+m bits comportant le mot principal et le mot de commande.

Le circuit d'interconnexion est alors avantageusement configuré pour router le mot global vers l'interface de sortie correspondante et ladite interface de sortie est avantageusement configurée pour ne pas délivrer le mot de commande au port d'accès.

Selon un mode de réalisation, chaque interface d'entrée est couplée à l'équipement source correspondant par un bus d'entrée de n pistes et au module de commande correspondant par un bus de commande de m pistes.

Le mot global de n+m bits est destiné à être routé sur un réseau de bus interne de n+m pistes au sein du circuit d'interconnexion.

Chaque interface de sortie est configurée pour recevoir un bus interne de n+m bits et est couplée au port d'accès correspondant par un bus de sortie de n pistes, les m pistes du bus interne de n+m pistes aboutissant à l'interface de sortie correspondante ne sont pas connectées au port d'accès.

Il est possible que le module de commande soit programmable par ledit au moins un équipement source.

Lorsque plusieurs équipements sources sont respectivement couplés à plusieurs modules de commande correspondants, le circuit d'interconnexion comportant alors plusieurs interfaces d'entrées respectivement couplées auxdits équipements sources, chaque module de commande peut être programmable par l'un des équipements sources.

L'équipement source apte à programmer chaque module de commande peut comprendre un cœur programmable ou un (micro)processeur.

Cet équipement source peut avantageusement incorporer un logiciel applicatif contenant des instructions destinées à programmer chaque table contenue dans chaque module de commande.

Ledit au moins un équipement cible peut comprendre un moyen de mémoire multiports.

Selon un autre aspect, il est proposé un procédé de gestion du routage de transactions au sein d'un système sur puce entre au moins un équipement source délivrant lesdites transactions et au moins un équipement cible ayant un espace adressable sectorisé et plusieurs ports d'accès, chaque transaction contenant un mot d'adresse.

Le procédé selon cet aspect comprend les étapes suivantes :
équiper le système sur puce d'un circuit d'interconnexion comportant au moins une interface d'entrée et plusieurs interfaces de sortie,
coupler respectivement ladite au moins une interface d'entrée audit au moins un équipement source et coupler respectivement les interfaces de sortie auxdits ports d'accès,
configurer chaque interface d'entrée de façon à ce qu'elle puisse recevoir chaque transaction émanant de l'équipement source correspondant et un mot de commande de valeur programmable associé à cette transaction,
configurer le circuit d'interconnexion de façon à ce que chaque transaction et son mot de commande soient routés vers l'une des interfaces de sortie en fonction de la valeur du mot de commande,
configurer chaque interface de sortie de façon que la transaction correspondante soit délivrée au port d'accès couplé à cette interface de sortie et que le mot de commande correspondant ne soit pas délivré à ce port d'accès, et
pour chaque équipement source, programmer une table indiquant l'un des ports d'accès pour chaque secteur de l'espace mémoire, et pour chaque transaction ajuster la valeur du mot de commande en fonction du mot d'adresse contenu dans ladite transaction et du contenu de ladite table.

Selon un mode de mise en œuvre, le procédé comprend un chargement dans ledit au moins un équipement source d'un logiciel applicatif contenant des instructions de programmation de ladite table, et une programmation de ladite table lors d'une exécution du logiciel applicatif.

Selon un mode de mise en œuvre, applicable pour la gestion du routage de transactions au sein du système sur puce entre plusieurs équipements sources délivrant lesdites transactions et ledit au moins un équipement cible, le procédé comprend un chargement dans l'un des équipements sources d'un logiciel applicatif contenant des instructions de programmation de chaque table associée à chaque équipement source, et une programmation desdites tables lors d'une exécution du logiciel applicatif.

L'équipement source contenant le logiciel applicatif peut comprendre un cœur programmable ou un microprocesseur.

Ledit au moins un équipement cible peut comprendre un moyen de mémoire multiports.

D'autres avantages et caractéristiques de l'invention apparaîtront à la description détaillée de modes de mise en œuvre et de réalisation, nullement limitative, et des dessins annexés sur lesquels :

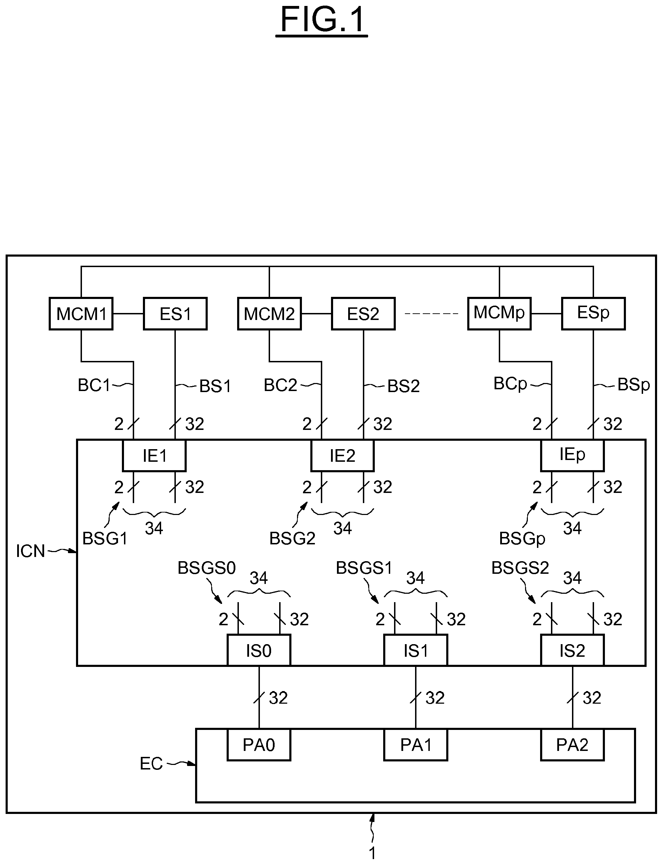

- les figures 1 à 6 illustrent schématiquement des modes de mise en œuvre et de réalisation de l'invention.

Sur la figure 1, la référence 1 désigne un système sur puce comportant plusieurs équipements sources ES1-Esp pouvant être de natures différentes.

Ainsi, l'un des équipements, par exemple l'équipement ES1 peut être un contrôleur d'écran LCD, un autre équipement, par exemple l'équipement ES2 peut être un processeur de traitement du signal, un autre équipement source peut être par exemple un décodeur et un autre équipement source, par exemple l'équipement ESp peut être un microprocesseur, par exemple un microprocesseur commercialisé par la société STMicroelectronics sous la référence STM32.

Le système sur puce 1 comporte également au moins un équipement cible EC, par exemple une mémoire vive multiports, ici une mémoire comportant trois ports d'accès PA0, PA1 et PA2.

Bien entendu, plusieurs équipements cibles, de nature identique ou différente, peuvent être prévus sur le système sur puce.

Afin d'interconnecter les équipements sources ESi avec l'équipement cible EC, le système sur puce 1 comporte également un circuit d'interconnexion ICN.

Ce circuit d'interconnexion comporte des interfaces d'entrée IE1-IEp respectivement couplées aux équipements sources ES1-ESp ainsi que des interfaces de sortie IS0-IS2 respectivement couplées aux ports d'accès PA0-PA2 de l'équipement cible EC.

Un tel circuit d'interconnexion est capable de router des transactions entre les différents équipements sources et le ou les équipements cibles.

Des transactions peuvent être par exemple des transactions d'écriture ou des transactions de lecture dans la mémoire EC.

La structure d'un tel circuit d'interconnexion, qui est en général un circuit d'interconnexion multicouches, ainsi que le protocole permettant l'échange et le routage des transactions à l'intérieur du circuit d'interconnexion sont bien connus de l'homme du métier.

Celui-ci pourra par exemple se référer notamment :
à l'article de Venkateswara Rao et autres intitulé « A Frame work on AMBA bus based Communication Architecture to improve the Real Time Computing Performance in MPSoC », International Journal of Computer Applications (0975-8887), Volume 91 - N° 5, Avril 2014,
ou
à une présentation générale de ces circuits d'interconnexion effectuée en 2015 par A. Gerstlauer et disponible à l'adresse internet http://users.ece.utexas.edu/~gerstl/ee382v_f14/lectures/lecture_12.pdf.

Par ailleurs, à titre indicatif mais non limitatif, on peut utiliser par exemple le circuit d'interconnexion commercialisé par la société ARM sous la référence NIC-400 (version R0p3).

Comme illustré sur la figure 1, chaque interface d'entrée IEi du circuit d'interconnexion ICN est connectée à l'équipement source correspondant ESi par un bus de n bits BSi.

Dans l'exemple décrit ici, le bus est un bus de 32 bits.

Chaque transaction émanant d'un équipement source ESi est incorporée au sein d'un mot dit « mot principal » de n bits véhiculé sur le bus BSi.

Comme il est connu en la matière, une transaction, par exemple une transaction d'écriture, contient notamment un champ d'adresse et de bits de contrôle et un champ de données à écrire.

Par exemple, l'adresse contenue dans la transaction peut être codée sur 16 bits.

Le système sur puce 1 comporte par ailleurs des modules de commande MCMi, dont on reviendra plus en détails ci-après sur la structure et la fonction, respectivement affectés et couplés aux différents équipements sources ES1-ESp et respectivement connectés aux interfaces d'entrée correspondantes IE1-IEp par des bus de commande BC1-BCp de m bits.

Chaque interface d'entrée est donc couplée à un bus de n+m bits.

La taille du m de chaque bus BCi dépend du nombre de ports d'accès du ou des équipements cibles EC.

Dans le cas présent, puisqu'on a trois ports d'accès PA0, PA1 et PA2 pour l'équipement EC, m vaut 2.

Chaque module de commande délivre donc 2 bits formant un mot de commande qui va être véhiculé sur le bus correspondant BCi conjointement au mot principal de 32 bits contenant la transaction.

Comme on le verra plus en détails ci-après, les modules de commande MCMi sont programmables.

Dans l'exemple décrit ici, les modules de commande sont programmés par l'un des équipements sources, en l'espèce l'équipement source ESp qui est par exemple ici le microprocesseur STM 32.

Le mot principal de 32 bits et le mot de commande de 2 bits forment un mot global de 34 bits.

D'une façon générale les différents mots globaux de 34 bits BSGi sont véhiculés vers les différentes interfaces de sortie IS0-IS2 par un réseau de bus internes de n+ m pistes.

Dans l'exemple décrit ici (n=32 et m=2), les différents mots globaux de 34 bits BSGi sont véhiculés vers les différentes interfaces de sortie IS0-IS2 par un réseau de bus internes de 34 pistes.

Chaque interface de sortie est donc configurée pour recevoir un bus interne de n+m bits (34 bits dans cet exemple), en l'espèce BSGS0 pour l'interface IS0, BSGS1 pour l'interface IS1, et BSGS2 pour l'interface IS2.

Par contre, comme illustré sur la figure 1, seules les n pistes (n=32 dans cet exemple) des bus BSGS0, BSGS1 et BSGS2 destinées à contenir la transaction, sont connectées aux ports d'accès PA0, PA1, PA2.

En d'autres termes, les m pistes (ici la 33^{ème} et la 34^{ème} pistes) véhiculant le mot de commande de m bits (ici le mot de commande de 2 bits), ne sont pas connectées au port d'accès correspondant.

De ce fait, la transaction délivrée à un port d'accès est identique à la transaction émanant d'un équipement source, et ce quel que soit le port d'accès sélectionné.

En fonction de la valeur du mot de commande délivré par le module de commande correspondant MCMi, la transaction émanant de l'équipement source correspondant sera routée soit vers l'interface de sortie IS0, et donc vers le port d'accès PA0, soit vers l'interface de sortie IS1 et donc le port d'accès PA1, soit vers l'interface de sortie IS2 et donc le port d'accès PA2.

Ainsi, à titre d'exemple non limitatif dans le cas ou m=2, si la valeur du mot de commande est égale à 00, la transaction sera routée vers le port d'accès PA0 tandis que si la valeur du mot de commande est égale à 01, la transaction sera routée vers le port d'accès PA1, et que si la valeur du mot de commande est égale à 10, la transaction sera routée vers le port d'accès PA2.

En fait, en pratique, les bits de commande sont par exemple les 2 bits de poids fort du mot d'adresse contenu dans la transaction.

Ainsi, si le mot d'adresse contenu dans la transaction est un mot de 16 bits, le mot d'adresse véhiculé sur le réseau de bus internes du circuit d'interconnexion est un mot de 18 bits. Le circuit d'interconnexion interprète donc le mot de 18 bits comme une adresse sur 18 bits. Et, le circuit d'interconnexion est alors configuré pour router ce mot de 18 bits soit vers l'interface de sortie IS0 soit vers l'interface de sortie IS1 soit vers l'interface de sortie IS2 en fonction de la valeur des deux bits de poids fort.

La configuration d'un circuit d'interconnexion s'effectue de façon classique, par exemple en langage VHDL. Puis, ce langage VHDL est transformé en un circuit matériel comportant un circuit de contrôle, des commutateurs et des bus et dont les différents chemins sont définis par la configuration du circuit d'interconnexion.

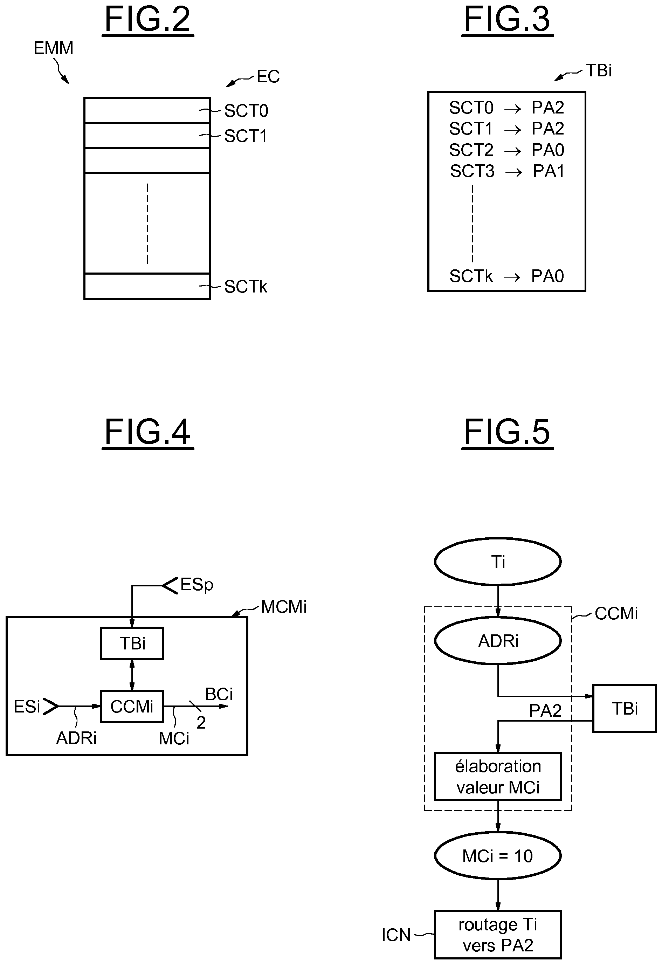

On se réfère maintenant plus particulièrement aux figures 2 à 5 pour détailler un exemple de gestion du routage des transactions.

L'élément cible EC, en l'espèce la mémoire multiports, comporte un espace mémoire adressable EMM qui est sectorisé ou partitionné. Ainsi, dans l'exemple illustré sur la figure 2, l'espace mémoire EMM comporte des secteurs SCT0-SCTk. Le nombre de secteurs dépend de la taille de l'espace mémoire.

En fonction de l'application envisagée et/ou de la nature du ou des éléments source, un ou plusieurs secteurs peuvent être affectés d'une priorité haute par rapport à d'autres secteurs affectés d'une priorité basse. L'ordre de priorité peut dépendre par exemple du contenu mémorisé dans un secteur. Ainsi, si un ou plusieurs secteurs comportent un code programme qui doit être toujours accessible par l'un des éléments source, par exemple le microprocesseur, et ce, quelle que soit la densité du trafic à l'intérieur du circuit d'interconnexion, alors le ou les secteurs considérés de l'espace mémoire seront affectés d'une priorité haute.

Et, à ces secteurs prioritaires vont être affectés par exemple l'un des ports d'accès tandis que les autres secteurs seront associés aux autres ports d'accès.

Cette correspondance entre les secteurs et les ports d'accès est stockée, comme illustré sur la figure 3, dans une table (look-up table) TBi. Il existe en pratique une table TBi par équipement source. Le contenu de la table peut être différent d'une table à une autre ou être identique entre certaines au moins des tables.

Comme illustré sur la figure 4, la table TBi appartient au module de commande MCMi associé et couplé à l'élément source ESi.

Cette table TBi est programmable par l'un des équipements source, en l'espèce l'équipement source ESp qui est le cœur programmable ou le microprocesseur.

Le module de commande MCMi comporte également un circuit de commande CCMi, réalisé par exemple à l'aide de circuits logiques, et configuré pour communiquer avec la table TBi et pour recevoir le mot d'adresse ADRi contenu dans chaque transaction Ti émanant de l'élément source ESi.

Et, comme illustré sur la figure 5, à partir du mot d'adresse ADRi, le circuit de commande CCMi détermine à quel secteur de l'espace mémoire EMM correspond ce mot d'adresse ADRi et par conséquent à quel port d'accès la transaction Ti est destinée.

Connaissant le port d'accès de destination, par exemple le port d'accès PA2, le circuit de commande CCMi est alors configuré pour élaborer la valeur du mot de commande MCi qui va être délivré sur le bus de commande BCi.

En l'espèce, puisque le port d'accès PA2 est désigné, la valeur du mot de commande MCi est égale à 10 ce qui permet au circuit d'interconnexion ICn de router la transaction Ti vers l'interface de sortie IS2 et donc le port d'accès PA2.

La programmation des tables TBi par l'utilisateur en fonction de l'application envisagée, permet une grande flexibilité d'utilisation du système sur puce. Ainsi, non seulement on peut changer des ordres de priorités en fonction de l'application mais on peut également pour d'autres applications affecter par exemple pour un ou plusieurs équipements sources, un même port d'accès pour tous les secteurs de l'espace mémoire EMM de l'équipement cible. Ceci revient alors à affecter un port d'accès à un équipement source et de router toutes les transactions émanant de cet équipement source vers ce port d'accès.

On peut ainsi, en fonction de la nature des équipements sources, décider de router toutes les transactions d'un équipement source vers un port d'accès et par exemple de router toutes les transactions émanant des autres équipements sources vers un ou plusieurs autres ports d'accès.

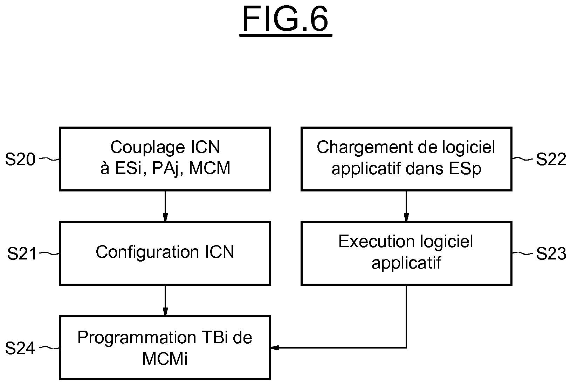

Un exemple de gestion du routage des transactions est illustré sur la figure 6.

Dans une première étape S20, on couple le circuit d'interconnexion ICN aux différents équipements sources ESi, aux différents ports d'accès PAj, ainsi qu'aux modules de commande MCMi.

Puis, on effectue dans une étape S21, la configuration du circuit d'interconnexion ICN de façon à ce que le routage d'une transaction vers un port d'accès dépende de la valeur logique du mot de commande associé à cette transaction.

Alors que l'on a représenté sur la figure 6 l'étape S21 postérieurement à l'étape S20, il serait bien entendu tout à fait envisageable de configurer tout d'abord le circuit d'interconnexion ICN de façon à le réaliser matériellement puis d'effectuer le couplage de ce circuit d'interconnexion ICN avec les équipements sources ESi, les ports d'accès PAj, et les modules de commande MCMi.

Dans une étape S22, on charge dans l'équipement source ESp, qui est en l'espèce un microprocesseur, un logiciel applicatif qui contient des instructions de programmation des tables TBi des modules de commande MCMi.

Ainsi, lors de l'exécution du logiciel applicatif (étape S23), la programmation des modules MCMi, et plus particulièrement celle des tables TBi, est effectuée (étape S24).

## Revendications

1. Système sur puce, comprenant
un circuit d'interconnexion (ICN) comportant au moins une interface d'entrée (IEi) et plusieurs interfaces de sortie (ISj),
au moins un équipement source (ESi) couplé à ladite interface d'entrée,
au moins un équipement cible (EC) possédant un espace adressable sectorisé et plusieurs ports d'accès (PA0-PA2) respectivement couplés auxdites interfaces de sortie, ledit au moins un équipement source étant configuré pour délivrer des transactions (Ti) contenant des mots d'adresses audit au moins un équipement cible (EC), et
au moins un module de commande programmable (MCMi) couplé audit au moins un équipement source et comportant une table (TBi) configurée pour, une fois le module de commande programmé, indiquer pour chaque secteur dudit espace adressable l'un des ports d'accès, ainsi qu'un circuit de commande (CCMi), apte en présence de chaque transaction émanant dudit au moins un équipement source, à délivrer au circuit d'interconnexion un mot de commande (MCi) désignant le port d'accès indiqué dans la table compte tenu du mot d'adresse contenu dans ladite transaction,
le circuit d'interconnexion (ICN) étant alors configuré pour router ladite transaction depuis ladite au moins une interface d'entrée vers l'interface de sortie couplée à ce port d'accès conjointement avec le mot de commande (MCi) et délivrer ladite transaction audit port d'accès, l'interface de sortie étant configurée pour ne pas délivrer le mot de commande au port d'accès, le contenu de chaque transaction délivrée à un port d'accès étant identique au contenu de la transaction correspondante délivrée par l'équipement source quel que soit le port d'accès sélectionné.

2. Système selon la revendication 1, dans lequel chaque transaction (Ti) est incorporée au sein d'un mot principal de n bits, le mot de commande comporte m bits additionnels, la valeur de m étant au moins égale à un et dépendant du nombre de ports d'accès, et chaque circuit de commande est configuré pour ajuster la valeur des m bits de façon à désigner ledit port d'accès compte tenu du mot d'adresse contenu dans ladite transaction et de ladite table correspondante, et chaque interface d'entrée est configurée pour recevoir un mot global de n+m bits comportant le mot principal et le mot de commande, le circuit d'interconnexion est configuré pour router le mot global vers l'interface de sortie correspondante, et ladite interface de sortie correspondante est configurée pour ne pas délivrer le mot de commande au port d'accès.

3. Système selon la revendication 2, dans lequel chaque interface d'entrée est couplée à l'équipement source correspondant par un bus d'entrée de n pistes et au module de commande correspondant par un bus de commande de m pistes, le mot global de n+m bits est destiné à être routé sur un réseau de bus internes de n+m pistes au sein du circuit d'interconnexion, chaque interface de sortie est configurée pour recevoir un bus interne de n+m bits et est couplée au port d'accès correspondant par un bus de sortie de n pistes, les m pistes du bus interne (BSGSO, BSGS1) de n+m pistes aboutissant à l'interface de sortie correspondante n'étant pas connectées audit port d'accès.

4. Système selon l'une des revendications précédentes, dans lequel ledit au moins un module de commande (MCMi) est programmable par ledit au moins un équipement source (ESp).

5. Système selon l'une des revendications 1 à 3, comprenant plusieurs équipements sources respectivement couplés à plusieurs modules de commande correspondants, le circuit d'interconnexion (ICN) comportant plusieurs interfaces d'entrées (IEi) respectivement couplées auxdits équipements sources, et chaque module de commande est programmable par l'un des équipements sources.

6. Système selon la revendication 4 ou 5, dans lequel l'équipement source (ESp) apte à programmer chaque module de commande comporte un cœur programmable ou un microprocesseur.

7. Système selon l'une des revendications 4 à 6, dans lequel l'équipement source (ESp) apte à programmer chaque module de commande incorpore un logiciel applicatif contenant des instructions destinées à programmer chaque table contenue dans chaque module de commande.

8. Système selon l'une des revendications précédentes, dans lequel ledit au moins un équipement cible (EC) comprend un moyen de mémoire multiports.

9. Procédé de gestion du routage de transactions au sein d'un système sur puce entre au moins un équipement source délivrant lesdites transactions et au moins un équipement cible ayant un espace adressable sectorisé et plusieurs ports d'accès, chaque transaction contenant un mot d'adresse, le procédé comprenant :
équiper le système sur puce d'un circuit d'interconnexion (ICN) comportant au moins une interface d'entrée et plusieurs interfaces de sortie,
coupler respectivement ladite au moins une interface d'entrée audit au moins un équipement source et coupler respectivement les interfaces de sortie auxdits ports d'accès,
configurer chaque interface d'entrée de façon à ce qu'elle puisse recevoir chaque transaction émanant de l'équipement source correspondant et un mot de commande de valeur programmable associé à cette transaction,
configurer le circuit d'interconnexion (ICN) de façon à ce que chaque transaction et son mot de commande soient routés vers l'une des interfaces de sortie en fonction de la valeur du mot de commande,
configurer chaque interface de sortie de façon que la transaction correspondante soit délivrée au port d'accès couplé à cette interface de sortie et que le mot de commande correspondant ne soit pas délivré à ce port d'accès, et
pour chaque équipement source, programmer une table indiquant l'un des ports d'accès pour chaque secteur de l'espace mémoire, et pour chaque transaction ajuster la valeur du mot de commande en fonction du mot d'adresse contenu dans ladite transaction et du contenu de ladite table.

10. Procédé selon la revendication 9, comprenant un chargement dans ledit au moins un équipement source (ESp) d'un logiciel applicatif contenant des instructions de programmation de ladite table, et une programmation de ladite table lors d'une exécution du logiciel applicatif.

11. Procédé selon la revendication 9, pour la gestion du routage de transactions au sein du système sur puce entre plusieurs équipements sources délivrant lesdites transactions et ledit au moins un équipement cible, comprenant un chargement dans l'un des équipements sources (ESp) d'un logiciel applicatif contenant des instructions de programmation de chaque table associée à chaque équipement source, et une programmation desdites tables lors d'une exécution du logiciel applicatif.

12. Procédé selon la revendication 10 ou 11, dans lequel l'équipement source contenant le logiciel applicatif comprend un cœur programmable ou un microprocesseur.

13. Procédé selon l'une des revendications 9 à 12, dans lequel ledit au moins un équipement cible (EC) comprend un moyen de mémoire multiports.

## Patentansprüche

1. Chipsystem, umfassend
eine Verbindungsschaltung (ICN), die mindestens eine Eingangsschnittstelle (IEi) und mehrere Ausgangsschnittstellen (ISj) aufweist,
mindestens ein Quellgerät (ESi), das an die Eingangsschnittstelle gekoppelt ist,
mindestens ein Zielgerät (EC), das einen sektorisierten adressierbaren Raum und mehrere Zugangsports (PA0-PA2) besitzt, die jeweils an die Ausgangsschnittstellen gekoppelt sind, wobei das mindestens eine Quellgerät konfiguriert ist, um dem mindestens einen Zielgerät (EC) Adresswörter enthaltende Transaktionen (Ti) bereitzustellen, und
mindestens ein programmierbares Steuermodul (MCMi), das an das mindestens eine Quellgerät gekoppelt ist und eine Tabelle (TBi) aufweist, die konfiguriert ist, um, sobald das Steuermodul programmiert ist, für jeden Sektor des adressierbaren Raums einen der Zugangsports anzugeben, sowie eine Steuerschaltung (CCMi), die imstande ist, bei Anwesenheit jeder Transaktion, die von dem mindestens einen Quellgerät ausgeht, der Verbindungsschaltung ein Steuerwort (MCi) bereitzustellen, das den in der Tabelle angegebenen Zugangsport unter Berücksichtigung des in der Transaktion enthaltenen Adressworts bezeichnet,
wobei die Verbindungsschaltung (ICN) somit konfiguriert ist, um die Transaktion von der mindestens einen Eingangsschnittstelle zur Ausgangsschnittstelle, die an diesen Zugangsport gekoppelt ist, gleichzeitig mit dem Steuerwort (MCi) zu routen und die Transaktion dem Zugangsport bereitzustellen, wobei die Ausgangsschnittstelle konfiguriert ist, um das Steuerwort dem Zugangsport nicht bereitzustellen, wobei der Inhalt jeder einem Zugangsport bereitgestellten Transaktion mit dem Inhalt der entsprechenden Transaktion identisch ist, die vom Quellgerät unabhängig vom ausgewählten Zugangsport bereitgestellt wird.

2. System nach Anspruch 1, wobei jede Transaktion (Ti) in ein Hauptwort aus n Bits integriert ist, wobei das Steuerwort m zusätzliche Bits aufweist, wobei der Wert von m mindestens gleich eins ist und von der Anzahl von Zugangsports abhängt, und jede Steuerschaltung konfiguriert ist, um den Wert der m Bits derart einzustellen, dass der Zugangsport unter Berücksichtigung des in der Transaktion enthaltenen Adressworts und der entsprechenden Tabelle bezeichnet wird, und jede Eingangsschnittstelle konfiguriert ist, um ein globales Wort aus n+m Bits zu empfangen, das das Hauptwort und das Steuerwort aufweist, wobei die Verbindungsschaltung konfiguriert ist, um das globale Wort zu der entsprechenden Ausgangsschnittstelle zu routen, und die entsprechende Ausgangsschnittstelle konfiguriert ist, um das Steuerwort dem Zugangsport nicht bereitzustellen.

3. System nach Anspruch 2, wobei jede Eingangsschnittstelle durch einen Eingangsbus mit n Kanälen an das entsprechende Quellgerät und durch einen Steuerbus mit m Kanälen an das entsprechende Steuermodul gekoppelt ist, wobei das globale Wort aus n+m Bits zum Routing über ein Netzwerk interner Busse aus n+m Kanälen in der Verbindungsschaltung bestimmt ist, wobei jede Ausgangsschnittstelle konfiguriert ist, um einen internen Bus aus n+m Bits zu empfangen und an den entsprechenden Zugangsport durch einen Ausgangsbus mit n Kanälen gekoppelt ist, wobei die m Kanäle des internen Busses (BSGSO, BSGS1) mit n+m Kanälen, die zu der entsprechenden Ausgangsschnittstelle führen, nicht mit dem Zugangsport verbunden sind.

4. System nach einem der vorangehenden Ansprüche, wobei das mindestens eine Steuermodul (MCMi) durch das mindestens eine Quellgerät (ESp) programmierbar ist.

5. System nach einem der Ansprüche 1 bis 3, umfassend mehrere Quellgeräte, die jeweils an mehrere entsprechende Steuermodule gekoppelt sind, wobei die Verbindungsschaltung (ICN) mehrere Eingangsschnittstellen (IEi) aufweist, die jeweils an die Quellgeräte gekoppelt sind, und jedes Steuermodul von einem der Quellgeräte programmierbar ist.

6. System nach Anspruch 4 oder 5, wobei das Quellgerät (ESp), das imstande ist, jedes Steuermodul zu programmieren, ein programmierbares Herz oder einen Mikroprozessor aufweist.

7. System nach einem der Ansprüche 4 bis 6, wobei das Quellgerät (ESp), das imstande ist, jedes Steuermodul zu programmieren, eine Anwendungssoftware integriert, die Befehle enthält, die zur Programmierung jeder Tabelle bestimmt ist, die in jedem Steuermodul enthalten ist.

8. System nach einem der vorangehenden Ansprüche, wobei das mindestens eine Zielgerät (EC) ein Multiport-Speichermittel umfasst.

9. Verfahren zur Verwaltung des Routings von Transaktionen in einem Chipsystem zwischen mindestens einem Quellgerät, das die Transaktionen bereitstellt, und mindestens einem Zielgerät mit einem sektorisierten adressierbaren Raum und mehreren Zugangsports, wobei jede Transaktion ein Adresswort enthält, wobei das Verfahren umfasst:
Ausstatten des Chipsystems mit einer Verbindungsschaltung (ICN), die mindestens eine Eingangsschnittstelle und mehrere Ausgangsschnittstellen aufweist,
Koppeln jeweils der mindestens einen Eingangsschnittstelle an das mindestens eine Quellgerät und Koppeln jeweils der Ausgangsschnittstellen an die Zugangsports,
Konfigurieren jeder Eingangsschnittstelle derart, dass sie jede Transaktion, die von dem entsprechenden Quellgerät ausgeht, und ein Steuerwort mit einem programmierbaren Wert, das dieser Transaktion zugeordnet ist, empfangen kann,
Konfigurieren der Verbindungsschaltung (ICN) derart, dass jede Transaktion und ihr Steuerwort in Abhängigkeit vom Wert des Steuerworts an eine der Ausgangsschnittstellen geroutet werden,
Konfigurieren jeder Ausgangsschnittstelle derart, dass die entsprechende Transaktion dem Zugangsport bereitgestellt wird, der an diese Ausgangsschnittstelle gekoppelt ist, und dass das entsprechende Steuerwort diesem Zugangsport nicht bereitgestellt wird, und
für jedes Quellgerät, Programmieren einer Tabelle, die für jeden Sektor des Speicherraums einen von den Zugangsports angibt, und für jede Transaktion, Einstellen des Werts des Steuerworts in Abhängigkeit von dem in der Transaktion enthaltenen Adresswort und vom Inhalt der Tabelle.

10. Verfahren nach Anspruch 9, umfassend ein Laden einer Anwendungssoftware, die Programmierbefehle für die Tabelle enthält, auf das mindestens eine Quellgerät (ESp), und eine Programmierung der Tabelle bei einer Ausführung der Anwendungssoftware.

11. Verfahren nach Anspruch 9 für die Verwaltung des Routings von Transaktionen in einem Chipsystem zwischen mehreren Quellgeräten, die die Transaktionen bereitstellen, und dem mindestens einen Zielgerät, umfassend ein Laden einer Anwendungssoftware, die Programmierbefehle für jede Tabelle enthält, die jedem Quellgerät zugeordnet ist, auf eins der Quellgeräte (ESp), und eine Programmierung der Tabellen bei einer Ausführung der Anwendungssoftware.

12. Verfahren nach Anspruch 10 oder 11, wobei das Quellgerät, das die Anwendungssoftware enthält, ein programmierbares Herz oder einen Mikroprozessor umfasst.

13. Verfahren nach einem der Ansprüche 9 bis 12, wobei das mindestens eine Zielgerät (EC) ein Multiport-Speichermittel umfasst.

## Claims

1. System on a chip, comprising
an interconnect circuit (ICN) including at least one input interface (IEi) and multiple output interfaces (ISj), at least one source device (ESi) coupled to said input interface,
at least one target device (EC) having a sectorised addressable space and multiple access ports (PA0-PA2) respectively coupled to said output interfaces, said at least one source device being configured to deliver transactions (Ti) containing address words to said at least one target device (EC), and
at least one programmable control module (MCMi) coupled to said at least one source device and including a table (TBi) configured, once the control module has been programmed, to indicate for each sector of said addressable space one of the access ports, as well as a control circuit (CCMi), able, in the presence of each transaction originating from said at least one source device, to deliver to the interconnect circuit a control word (MCi) designating the access port indicated in the table in consideration of the address word contained in said transaction,
the interconnect circuit (ICN) then being configured to route said transaction from said at least one input interface to the output interface coupled to this access port jointly with the control word (MCi) and to deliver said transaction to said access port, the output interface being configured to not deliver the control word to the access port, the content of each transaction delivered to an access port being identical to the content of the corresponding transaction delivered by the source device regardless of the access port selected.

2. System according to claim 1, wherein each transaction (Ti) is incorporated within a main word of n bits, the control word includes m additional bits, the value of m being at least equal to one and depending on the number of access ports, and each control circuit is configured to adjust the value of the m bits so as to designate said access port in consideration of the address word contained in said transaction and of said corresponding table, and each input interface is configured to receive an overall word of n+m bits including the main word and the control word, the interconnect circuit is configured to route the overall word to the corresponding output interface, and said corresponding output interface is configured to not deliver the control word to the access port.

3. System according to claim 2, wherein each input interface is coupled to the corresponding source device by an input bus of n tracks and to the corresponding control module by a control bus of m tracks, the overall word of n+m bits is intended to be routed over an internal bus network of n+m tracks within the interconnect circuit, each output interface is configured to receive an internal bus of n+m bits and is coupled to the corresponding access port by an output bus of n tracks, the m tracks of the internal bus (BSGSO, BSGS1) of n+m tracks leading to the corresponding output interface not being connected to said access port.

4. System according to one of the preceding claims, wherein said at least one control module (MCMi) is programmable by said at least one source device (ESp).

5. System according to one of claims 1 to 3, comprising multiple source devices respectively coupled to multiple corresponding control modules, the interconnect circuit (ICN) including multiple input interfaces (IEi) respectively coupled to said source devices, and each control module is programmable by one of the source devices.

6. System according to claim 4 or 5, wherein the source device (ESp) able to program each control module includes a programmable core or a microprocessor.

7. System according to one of claims 4 to 6, wherein the source device (ESp) able to program each control module incorporates a software application containing instructions intended to program each table contained in each control module.

8. System according to one of the preceding claims, wherein said at least one target device (EC) comprises a multiport memory means.

9. Method for managing the routing of transactions within a system on a chip between at least one source device delivering said transactions and at least one target device having a sectorised addressable space and multiple access ports, each transaction containing an address word, the method comprising:
equipping the system on a chip with an interconnect circuit (ICN) including at least one input interface and multiple output interfaces,
coupling respectively said at least one input interface to at least one source device and coupling respectively the output interfaces to said access ports,
configuring each input interface so that it can receive each transaction originating from the corresponding source device and a programmable value control word associated with this transaction,
configuring the interconnect circuit (ICN) so that each transaction and its control word are routed to one of the output interfaces depending on the value of the control word,
configuring each output interface so that the corresponding transaction is delivered to the access port coupled to this output interface and that the corresponding control word is not delivered to this access port, and
for each source device, programming a table indicating one of the access ports for each sector of the memory space, and for each transaction adjusting the value of the control word depending on the address word contained in said transaction and on the content of said table.

10. Method according to claim 9, comprising loading into said at least one source device (ESp) a software application containing instructions for programming said table, and programming said table during an execution of the software application.

11. Method according to claim 9, for managing the routing of transactions within the system on a chip between multiple source devices delivering said transactions and said at least one target device, comprising loading into one of the source devices (ESp) a software application containing instructions for programming each table associated with each source device, and programming said tables during an execution of the software application.

12. Method according to claim 10 or 11, wherein the source device containing the software application comprises a programmable core or a microprocessor.

13. Method according to one of claims 9 to 12, wherein said at least one target device (EC) comprises a multiport memory means.
